Europäisches Patentamt

European Patent Office

Office européen des brevets

(19)

(11) Veröffentlichungsnummer: **0 345 256 B1**

(12) # EUROPÄISCHE PATENTSCHRIFT

(45) Veröffentlichungstag der Patentschrift: **11.11.92**

(51) Int. Cl.⁵: **E21B 43/12**, E21B 43/04, E03B 3/12

(21) Anmeldenummer: **87907739.4**

(22) Anmeldetag: **29.11.87**

(86) Internationale Anmeldenummer:
**PCT/DE87/00558**

(87) Internationale Veröffentlichungsnummer:
**WO 88/04352 (16.06.88 88/13)**

Teilanmeldung 92101153.2 eingereicht am
29/11/87.

(54) **VERFAHREN ZUM HERSTELLEN EINES BRUNNENS.**

(30) Priorität: **03.12.86 DE 3641306**
**23.04.87 DE 3713577**

(43) Veröffentlichungstag der Anmeldung:
**13.12.89 Patentblatt 89/50**

(45) Bekanntmachung des Hinweises auf die
Patenterteilung:
**11.11.92 Patentblatt 92/46**

(84) Benannte Vertragsstaaten:
**AT BE CH DE FR GB IT LI LU NL SE**

(56) Entgegenhaltungen:
DE-A- 2 856 825     DE-A- 3 147 935
DE-A- 3 502 570     DE-A- 3 512 709
US-A- 3 548 935     US-A- 4 366 862

(73) Patentinhaber: **TERRATRONIC VERTRIEB VON
ZIELBOHRSYSTEMEN GMBH
Höglwörther Strasse 1
W-8000 München 70(DE)**

(72) Erfinder: **GROTENDORST, Josef
Hofkant 19
W-4270 Dorsten/Rahde(DE)**
Erfinder: **GROTENDORST, Gerhard
Marbeck 36
W-4280 Borken 4(DE)**

(74) Vertreter: **Herrmann-Trentepohl, Werner,
Dipl.-Ing.
Patentanwälte Herrmann-Trentepohl, Kirschner, Grosse, Bockhorni & Partner Schäferstrasse 18 Postfach 1140
W-4690 Herne 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf ein Verfahren zum Herstellen eines Brunnens gemäß dem Oberbegriff des Hauptanspruches.

Aus der DE-A-35 12 709 ist ein gattungsbildendes Verfahren für die Brunnenherstellung im nicht ohne weiteres handfestem Gestein bekannt, bei welchem zwischen dem im Bereich des Filterrohrabschnittes - im nachfolgenden einfach "Filterrohr" genannt - eingebrachten Filterkies und dem restlichen Teil des Ringraumes zwischen Aufsatzrohrabschnitt - im nachfolgenden einfach "Aufsatzrohr" genannt - und Bohrlochinnenwand eine pumpfähige, dauerplastische oder dauerelastische Dichtung eingefüllt wird und der Ringraum zwischen dem Aufsatzrohr und der Bohrlochinnenwandung zum Zwecke der Probeentnahme verfüllt und abgedichtet wird.

Durch eine solche bekannte Verfahrensweise wird erreicht, daß eine Wasserentnahme nur im Bereich des eigentlichen Filterrohres erfolgen kann und daß ggf. oberhalb des Filterrohres liegende wasserführende Schichten durch die Abdichtung des zwischen dem Aufsatzrohr und der Bohrlochinnenwandung liegenden Ringraumes hermetisch und hydraulisch gegenüber den Öffnungen des Filterrohres abgeschlossen werden.

Die bekannte Verfahrensweise hat den Nachteil, daß es mit dieser Brunnenbauweise mittels Spülbohrverfahren nicht möglich ist, die Wasserentnahme nur in belastungsarmen wasserführenden Gesteinsabschnitten durchzuführen. Wenn nämlich das Filterrohr in einem wasserführenden Abschnitt angeordnet ist, der doch noch mit Schadstoffen belastet ist, muß das gesamte Bohrloch aufgebohrt werden. Dazu müssen vorher Filterrohre und Aufsatzrohre gezogen werden. Das Ziehen der Aufsatzrohre ist aber so gut wie unmöglich, da aufgrund der Reibung zwischen dem den Ringraum verfüllenden Dichtmaterial und der Außenseite der Aufsatzrohre ein Widerstand gegen die Zugbewegung entsteht, der die Rohre üblicherweise zerstört.

Aus der DE-A-4 366 862 ist eine Einrichtung bekannt, mit der im standfesten Gebirge über im Abstand angeordnete, gegen die Bohrlochwandung anpreßbare Packer eine unterirdische Zone begrenzt werden kann, um eine Probe der Flüssigkeit zu entnehmen. Packer sind nur im standfesten Gebirge einsetzbar. Im nicht standfesten Gebirge, wo mit Spülflüssigkeitszusätzen zur Stabilisierung der Bohrlochwandung gearbeitet werden muß, zerstören Packer nicht nur die auf der Bohrlochwandung sitzende Stabilisierungsschicht, sondern auch die Bohrlochwandung selbst.

Der Erfindung liegt demgegenüber die Aufgabe zugrunde, ein Verfahren zum Herstellen eines Brunnens so zu führen, das in beliebigen Horizonten während des Abteufens des Bohrlochs überprüft werden kann, um zu erreichen, daß das endgültige Filterrohr nur in dem Abschnitt angeordnet wird, der tatsächlich den Qualitätsanforderungen entsprechendes Wasser führt und eine ständige Bestimmung von physikchemischen oder mikrobakteriologischen Wasserparametern sowie von hydrogeologischen Gesteinsparametern während der Bohrarbeit zu ermöglichen.

Diese der Erfindung zugrundeliegende Aufgabe wird durch die Lehre des Hauptanspruches gelöst.

Vorteilhafte Ausgestaltungen des erfindungsgemäßen Verfahrens sind in den Unteransprüchen erläutert.

Die Erfindung schlägt vor, beim Abteufen eines Bohrloches zu Grundwasseruntersuchungszwecken in beliebigen, kontrollierbaren Abschnitten ein Filterrohr einzusetzen, an das sich nach oben hin die an sich bekannten Aufsatzrohre anschließen. Der Ringraum zwischen Bohrlochinnenwandung und Filterrohraußenseite wird dann mit einer Sandkornschüttung ausgefüllt, die die angegebene Korngröße aufweist. Dieses Filtermedium reicht über das obere Ende des Filterrohres und das untere Ende des Aufsatzrohres um ein gewisses Maß hinaus. An diese Schüttung schließt sich in dem Ringraum zwischen Aufsatzrohr und Bohrlochinnenwandung nur die Spülflüssigkeit aus dem Bohrvorgang an. Nunmehr wird aus dem Filterrohr, das als Hilfsfilterrohr anzusehen ist, langsam und vorsichtig Wasser abgepumpt. Hierbei bewirkt die feinkörnige, aber noch ausreichend wasserdurchlässige Schüttung im Ringraum zwischen Filterrohr und Bohrlochinnenwand eine ausreichende Abdichtung am oberen Ende des Filtermediums. Diese Abdichtung wird dadurch erreicht, daß sedimentierende Feinstoffe, teils Zusätze der Spülflüssigkeit und teils Abrieb von Feinteilen aus der Bohrlochwandung den obersten Bereich der Schüttung zusetzen, der dadurch wasserundurchlässig wird, während die übrigen Bereiche wasserdurchlässig bleiben. Deshalb kann nun das zu untersuchende Wasser aus dem anstehenden wasserführenden Horizont die Filterschicht durchdringen, ohne daß eine hydraulische Verbindung zwischen dieser Wasserschicht und dem oberen Bereich des Bohrloches, in dem die Aufsatzrohre mit der Spülflüssigkeit vorhanden sind, eintreten kann.

Hiervon unterscheidet sich ein anderes vorbekanntes Verfahren (US-PS 4 366 862) dadurch, daß in das abgeteufte Bohrloch ein Filterrohrabschnitt mit spreizbaren Dichtungen ober- und unterhalb des Produktionshorizontes eingeführt wird.

Gemäß der Erfindung kann auch vorgesehen werden, daß die Abdichtung der Schüttung zusätzliche, in die Spülflüssigkeit eingebrachte Spülungszusätze verbessert wird, wobei diese quellfähigen Dichtstoffe in Form von Mehlen oder Granulaten ausgebildet sein können.

Das erfindungsgemäße Verfahren gestattet es, einen einzelnen zu untersuchenden Bohrlochabschnitt auf die Höhe des im unteren Verrohrungsabschnittes eingebauten Filterrohres zu begrenzen, wodurch eine wesentlich stärkere Differenzierung als bei den bisher üblichen Untersuchungsverfahren zur Bestimmung der Wasserbeschaffenheit erreicht werden kann.

Nach dem Klarpumpen des Brunnens kann sofort eine Wasserprobe entnommen werden.

Es ist also nicht immer erforderlich, den oberhalb des vorbeschriebenen Abdichthorizontes im Ringraum vorhandenen weiteren Ringraum zu verfüllen. Die Abdichtung ist derart dicht, daß das im nach oben ragenden Bohrlochabschnitt anstehende Bohr- und Spülwasser keinen hydraulischen Zutritt zum Brunnen über das Filterrohr erlangt. Dies zeigt sich darin, daß der Flüssigkeitsspiegel im Ringraum zwischen Aufsatzrohr und Bohrlochinnenwand ohne äußere Zufuhr weiteren Wassers konstant bleibt.

Da ein Wasserabsenkungstrichter vermieden wird, d. h. die vertikalen Abströmwege abgedichtet sind, fällt im Bereich der Wasseruntersuchung die Mischwasserförderung aus mehreren Wasserhorizonten weg, da keine hydraulische Verbindung zwischen Gebirge und Brunnenausbauwandung entstehen kann.

Gemäß einer abgewandelten Ausführungsform kann die der Erfindung zugrundeliegende Aufgabe auch dadurch gelöst werden, daß ein besonderes Bohrgestänge Verwendung findet, bei welchem im unteren Teil oberhalb des eigentlichen Bohrkopfes ein Filterrohrabschnitt angeordnet ist, das einen kleineren Außendurchmesser als den Außendurchmesser des Bohrkopfes aufweist. In den so gebildeten Ringraum zwischen Oberkante-Bohrkopf, Außenseite des Filterrohres und Innenwandung des Bohrloches wird dann eine Filterschichtschüttung in der Konrgröße von 0,3 bis 0,7 bzw. 0,7 bis 1,2 mm eingebracht.

Auch hier erfolgt das automatische Zusetzen des oberen Ringbereiches der Schüttung durch die feinkörnigen Bestandteile der Bohrspülung und es ist nun eine Kontrolle des im Bereich des Bohrkopfes abzusaugenden Wassers möglich, wobei selbstverständlich der Bohrkopf und das Bohrgestänge als Förderleitung dienen.

Ausführungsbeispiele der Erfindung werden nachfolgend anhand der Zeichnung erläutert.

Die Zeichnung zeigt schematisch die Erfindung.

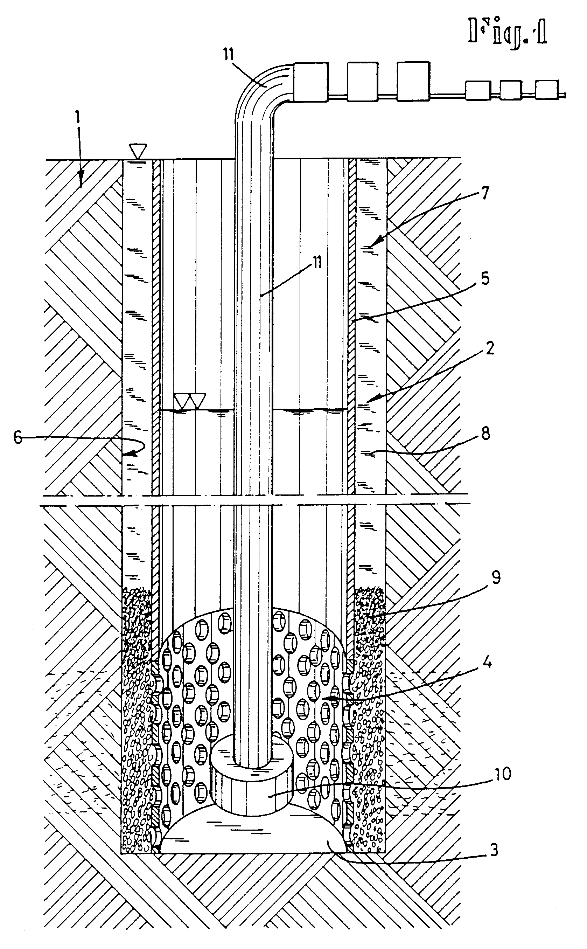

In Fig. 1 ist mit (1) das Gebirge bezeichnet, in dem ein Bohrloch (2) abgeteuft ist. In das Bohrloch (2) ist aufsetzend auf der Bohrlochsohle (3) ein Filterrohr (4), das aus verschiedenen einzelnen Filterrohrabschnitten bestehen kann, eingesetzt, an das sich ein Aufsatzrohr (5) anschließt, das aus verschiedenen einzelnen Aufsatzrohrabschnitten bestehen kann.

Zwischen dem Aufsatzrohr (5) und der eigentlichen Bohrlochwandung (6) ist so ein Ringraum (7) entstanden, der bei dem dargestellten Ausführungsbeispiel mit Spülflüssigkeit (8) ausgefüllt ist.

Im Bereich des Filterrohres (4) ist eine Sandkornschüttung (9) eingebracht, vorzugsweise in einer Korngröße von 0,3 bis 0,7 bzw. 0,7 bis 1,2 mm, wobei diese Schüttung (9) über die Unterkante des Aufsatzrohres (5) nach oben hin hinausragt, beispielsweise 1 bis 1,5 mm.

Mit (10) ist eine Pumpe verdeutlicht und mit (11) eine Pumpleitung, an die sich Filteranlagen (12) und elektronisch chemische Meßeinrichtungen (14) anschließen können.

Durch Inbetriebnahme der Pumpe (10) wird das in dem Aufsatzrohr (15) befindliche Wasser abgesaugt und gleichzeitig kann aus dem Gebirgshorizont, in dem sich das Filterrohr (4) befindet, Wasser in das Bohrloch (2) nachströmen. Aufgrund des so erzeugten Unterdruckes erfolgt dadurch, daß aus sedimentierenden Feinstoffen, teils aus Zusätzen zur verwendeten Spülflüssigkeit, teils aus Abrieb von Feinteilen aus der Bohrlochwandung, ein Zusetzen des obersten Bereiches der Schüttung in dem Abschnitt erfolgt, in dem dieser Bereich noch von dem Aufsatzrohr (5) innen umgeben ist.

Hierdurch erfolgt in überraschender Weise ein vollkommenes Zusetzen des oberen Ringbereiches der Sandkornschüttung (9), wobei dieses Zusetzen verhindert, daß eine hydraulische Verbindung zwischen dem mit Spülflüssigkeit (8) gefüllten Ringraum (7) und dem Ringraum zwischen Filterrohr (4) und Bohrlochwandung erfolgt, so daß nur das Wasser aus dem Filterrohr (4) über die Pumpe (10) abgesaugt werden kann, das in dem Gebirgshorizont ansteht, in dem sich auch das Filterrohr (4) befindet.

**Patentansprüche**

1. Verfahren zum Herstellen eines Brunnens, für den ein Bohrloch abgeteuft wird, in welches eine Abpumpvorrichtung (10) bis zu dem Erdhorizont eingesetzt wird, aus welchem Wasser entnommen werden soll, wobei in einen von der Bohrlochwandung (6) begrenzten Ringraum (7) ein Filtermedium (9) verfüllt und auf dessen obere Oberfläche eine Dichtschicht gebildet wird, welche das Eindringen von Wasser durch den Brunnen von oben in den ausgewählten Erdhorizont verhindert, dadurch gekennzeichnet, daß als Filtermedium Filtersand (9) mit einer Korngröße von 0,3 bis 0,7mm bzw. 0,7 bis 1,2mm verfüllt wird,
daß zur Bildung der Dichtschicht, solange im Ringraum (7) befindliche Spülflüssigkeit (8) durch den Filtersand (9) gepumpt wird, bis sich dessen oberste Schicht durch im Spülwasser befindliche Feinstoffe zusetzt,
und daß Filtersand (9) nur bis zu einer Höhe verfüllt wird, die ausreicht, den ausgewählten Erdhorizont und die Abpumpvorrichtung nach oben hin abzudichten.

2. Verfahren nach Anspruch 1, dadurch gekennzeichnet, daß in den Ringraum zwischen Filterrohr und Bohrlochwandung Filtersand eingefüllt wird, bis dieser über das Ende des Filterrohres etwa um 1 m darüber hinaus reicht.

3. Verfahren nach Anspruch 1 bis 3, dadurch gekennzeichnet, daß während der Probeentnahme aus dem Bereich des Filterrohres zusätzlich Spülungszusätze in Form von quellförmigen Dichtstoffen, vorzugsweise Carboxymethylcellulosederivate in den mit Spülflüssigkeit gefüllten Ringraum eingefüllt werden.

4. Verfahren nach Anspruch 2, dadurch gekennzeichnet, daß die Filtersandschichtschüttung in Abhängigkeit des umgebenden Gebirges auf 1,5 m erhöht wird.

5. Verfahren nach einem oder mehreren der vorhergehenden Ansprüche, dadurch gekennzeichnet, daß die Schlitzweite des Filterrohres auf etwa 0,3 bis 1,0 mm eingestellt wird.

6. Verfahren nach Anspruch 1, dadurch gekennzeichnet, daß zur Probeuntersucherung die Wasserentnahme aus dem Bereich des Filterrohres mit geringer Anströmung durchgeführt wird, z. B. 1,5 bis 2,5 m³/h.

## Claims

1. A process for making a well by sinking a borehole, into which a pumping-out device (10) is inserted as far as the layer of earth from which water is to be extracted, wherein a filter medium (9) is introduced into an annular chamber (7) bounded by the walls of the borehole (6) and on the upper surface of which a sealing layer is formed which prevents the penetration of water through the well from above into the selected layer of earth, characterised in that filter sand (9), having a grain size of 0.3 to 0.7mm resp. 0.7 to 1.2mm, is introduced as a filter medium, that, in order to form the sealing layer, cleansing water (8), whilst present in the annular chamber (7), is pumped through the filter sand (9) until its uppermost layer is clogged by the fine materials present in the cleansing water, and that the filter sand (9) is only introduced up to a height, which is sufficient to seal the selected layer of earth and the pump device at the top.

2. A process according to Claim 1, characterised in that filter sand is introduced into the annular chamber between the filter pipe and the walls of the borehole until said sand extends to about 1m above the end of the filter pipe.

3. A process according to Claim 1 or 2, characterised in that during the extraction of samples from the region of the filter pipe, cleansing additives in the form of source-type sealing materials, preferably carboxymethyl cellulose derivatives are also introduced into the annular chamber filled with cleansing liquid.

4. A process according to Claim 2, characterised in that the filling of the filter sand layer is increased to 1.5m depending upon the surrounding rock.

5. A process according to one or more of the preceding claims, characterised in that the slit opening of the filter pipe is set at about 0.3 to 1.0mm.

6. A process according to claim 1, characterised in that, for the study of samples, the extraction of water from the region of the filter pipe is carried out with a low rate of flow, that is from 1.5 to 2.5 m³/hr.

## Revendications

1. Procédé pour réaliser un puits, pour lequel on fore un trou où l'on enfonce un dispositif de pompage (10) jusqu'au niveau du sol où l'eau doit être prise, après quoi on bourre de matière filtrante (9) un volume annulaire (7) limité par la paroi du trou foré en disposant une couche d'étanchéité sur la face supérieure de ce bourrage, pour empêcher l'eau de pénétrer dans le puits jusqu'au niveau choisi pour la prise d'eau en passant par le haut, caractérisé en ce qu'on utilise comme matière filtrante pour le bourrage un sable filtrant (9) ayant une granulométrie comprise entre 0,3 à 0,7 mm, respectivement 0,7 à 1,2 mm, en ce que, pour réaliser la couche d'étanchéité, on pompe le liquide de lavage (8) qui se trouve dans le volume annulaire (7), à travers le sable filtrant (9), jusqu'à ce que la couche supérieure de celui-ci soit colmatée par les matières fines présentes dans l'eau de lavage,

et en ce qu'on réalise le bourrage de sable filtrant (9) seulement jusqu'à une hauteur suffisante pour étancher vers le haut le niveau du sol choisi pour la prise d'eau et le dispositif de pompage,

2. Procédé selon la revendication 1, caractérisé en ce qu'on réalise le bourrage de sable filtrant dans le volume annulaire compris entre le tube de filtrage et la paroi du trou foré pour le puits, en allant jusqu'à une hauteur d'environ 1 m au-dessus de l'extrémité du tube de filtrage.

3. Procédé selon la revendication 1 ou 2, caractérisé en ce que, pendant le prélèvement d'échantillons dans la zone du tube de filtrage, on introduit dans le volume annulaire rempli par le liquide de lavage des additifs de lavage constitués par des matières d'étanchéité ayant tendance à gonfler, telles que de préférence des dérivés de carboxyméthylcellulose.

4. Procédé selon la revendication 2, caractérisé en ce qu'on élève jusqu'à 1,5 m la hauteur du bourrage de sable filtrant, suivant la nature du sol à l'entour.

5. Procédé selon l'une ou plusieurs des revendications précédentes, caractérisé en ce qu'on adopte pour les fentes du tube de filtrage une largeur comprise entre 0.3 et 1,0 mm environ.

6. Procédé selon la revendication 1, caractérisé en ce que, pour les prélèvements d'échantillons, on effectue le prise d'eau à l'endroit du tube de filtrage en opérant à un faible débit, compris par exemple entre 1,5 et 2,5 m$^3$/h.

Fig. 1